# FASCICULE DE BREVET EUROPEEN

(11) **EP 1 623 200 B1**
(45) Date de publication et mention de la délivrance du brevet: **03.01.2007**
(21) Numéro de dépôt: 04730499.3
(22) Date de dépôt: 30.04.2004
(51) Int. Cl.: G01L 23/22, F02P 5/152

(54) **PROCEDE DE DETERMINATION DE L`ENERGIE D`UN SIGNAL CLIQUETIS POUR MOTEUR A COMBUSTION INTERNE**
VERFAHREN ZUR BESTIMMUNG DER ENERGIE EINES KLOPFSIGNALS EINER BRENNKRAFTMASCHINE
METHOD FOR DETERMINING THE ENERGY OF A KNOCK SIGNAL FOR AN INTERNAL COMBUSTION ENGINE

(30) Priorité: 09.05.2003 FR 0305609
(43) Date de publication de la demande: 08.02.2006
(73) Titulaire: Siemens VDO Automotive, 31036 Toulouse Cédex 1 (FR)
(72) Inventeur: GALTIER, Frédéric, F-34070 Montpellier (FR); TRESCAZES, Jérôme, F-31800 Latoue (FR); DANET, Bertrand, F-31400 Toulouse (FR)
(74) Mandataire: Berg, Peter
(86) Numéro de dépôt international: PCT/EP2004/004593
(87) Numéro de publication internationale: WO 2004/099750

(56) Documents cités:
- DE-A- 19 549 175
- DE-C- 3 145 294
- US-A- 4 481 924
- US-A- 4 593 553
- US-A- 5 400 644

## Description

La présente invention est relative à un procédé de détermination de l'énergie d'un signal de cliquetis pour moteur à combustion interne, et plus particulièrement à un tel procédé faisant appel à des moyens de calcul essentiellement numériques.

Pour la commande des moteurs à combustion interne, il est fréquent de faire appel à la détermination de l'énergie d'un signal représentatif du cliquetis du moteur, signal analogique issu par exemple d'un capteur accélérométrique monté sur le moteur, afin de pouvoir agir sur des paramètres de commande comme en particulier l'avance à l'allumage. Cette énergie a été longtemps déterminée par des moyens analogiques, en filtrant le signal issu du capteur tant dans une fenêtre temporelle au cours de laquelle le cliquetis est susceptible de se produire (FR-2 571 141) que dans une gamme de fréquences du signal caractéristique de ce cliquetis, puis en redressant et intégrant ce signal filtré.

Avec l'arrivée sur le marché de processeurs numériques puissants, de nouveaux procédés essentiellement numériques ont été développés.

On connaît de la technique antérieure, par exemple du document US-A-5 400 644 un procédé de détection du cliquetis dans lequel on analyse l'énergie du signal du capteur selon un premier spectre fréquentiel supposé être celui du cliquetis et selon un second spectre représentatif du bruit du moteur, et on déduit la présence de cliquetis de la comparaison de ces énergies.

Le but de l'invention est de proposer une solution plus simple et bon marché proposant une détection améliorée du cliquetis. Pour ce faire, conformément à l'invention, le procédé comporte les étapes suivantes :
a) mise en forme du signal analogique,
b) conversion dudit signal analogique en séquence d'échantillons numériques,
c) filtrage numérique,
d) redressement et
e) intégration du signal,
   dans lequel procédé :
   i) la mise en forme du signal analogique comprend l'addition dudit signal avec une composante continue adaptée à rendre ledit signal mis en forme positif ou nul,
   ii) le filtrage numérique est effectué au moyen d'un filtre passe-bande à réponse impulsionnelle infinie dont la fonction de transfert comporte un zéro pour les fréquences nulles.

L'obtention d'un signal positif avant conversion est favorable à la conversion du signal analogique en signal numérique. Le fait de l'obtenir en ajoutant une composante continue permet de conserver les caractéristiques spectrales du signal délivré par l'accéléromètre. De plus, elle est simple et peu coûteuse. Le filtre à réponse impulsionnelle infinie permet d'obtenir une bonne discrimination du cliquetis en tenant compte des particularités de chaque moteur et de ses éventuelles évolutions. De plus, il se présente sous la forme d'une équation linéaire, ce qui permet de simplifier les calculs.

Afin d'améliorer encore la détection de la présence de cliquetis, conformément à une caractéristique avantageuse complémentaire, la mise en forme du signal analogique comprend en outre une amplification en boucle ouverte dudit signal par un gain analogique déterminé en fonction du régime de rotation du moteur.

Cette solution constitue un moyen simple, robuste et peu onéreux d'obtenir un signal s'étendant dans la gamme optimale de fonctionnement du convertisseur analogique-numérique.

De préférence, la mise en forme du signal analogique comprend en outre un filtre anti-repliement, afin d'éviter que la conversion du signal analogique en signal numérique n'affectent sensiblement les caractéristiques du signal.

Selon une autre caractéristique de l'invention, le filtre passe-bande est réalisé sous la forme d'une cellule bi-quadratique programmable, dont la fréquence centrale est définie en fonction des conditions de fonctionnement du moteur.

L'implémentation en cellule bi-quadratique limite le nombre de registres mémoires nécessaires au filtrage et simplifie les calculs. La gamme de fréquences dans laquelle l'information relative à la présence de cliquetis variant en fonction des conditions de fonctionnement du moteur, en adaptant la fréquence centrale du filtre en fonction de ces conditions, on améliore ainsi la détermination de la présence de cliquetis.

En outre, conformément à l'invention, la mise en oeuvre numérique du filtre passe bande est effectuée par une expression récursive en deux étapes, la première étape conduisant à une variable intermédiaire représentative du calcul des zéros du filtre, la seconde s'acquittant du calcul des pôles. Ainsi, on peut utiliser les mêmes registres mémoires du microprocesseur pour le calcul des zéros puis pour le calcul des pôles, de sorte que le nombre de registres mémoire est divisé par deux. Il est également possible d'éliminer directement la composante continue artificiellement ajoutée au signal d'origine.

Selon une autre caractéristique avantageuse de l'invention, les coefficients du filtre passe-bande (ou tout autre paramètre apparaissant dans le procédé conforme à l'invention) sont tirés d'une table précalculée en fonction des conditions de fonctionnement du moteur. Ainsi, on évite d'effectuer des calculs supplémentaires afin de déterminer les coefficients.

De plus, le signe est avantageusement déterminé par un bit du registre de sorte que l'étape de redressement est effectuée par suppression d'un bit de signe d'un registre contenant le dernier échantillon filtré du signal.

Conformément à une autre caractéristique avantageuse de l'invention, l'étape d'intégration est réalisée au moyen d'un intégrateur numérique à phase constante. Ainsi, on conserve l'intégrité de l'information fréquentielle du signal, laquelle constitue un élément essentiel dans la détermination de la présence de cliquetis.

Pour ce faire, la mise en oeuvre de l'intégrateur est avantageusement effectuée par une sommation discrète des échantillons filtrés et redressés, à laquelle on rajoute la valeur de ladite somme à l'avant-dernier échantillon.

L'invention va apparaître encore plus clairement dans la description qui va suivre, faite en référence aux dessins annexés dans lesquels :
- la figure 1 est une représentation schématique du procédé conforme à l'invention,
- la figure 2A est une représentation du signal analogique fourni par l'accéléromètre,
- la figure 2B est une représentation du signal de la figure 2A après mise en forme conformément à une technique antérieure,
- la figure 2C est une représentation du signal de la figure 2A après mise en forme conformément à l'invention.

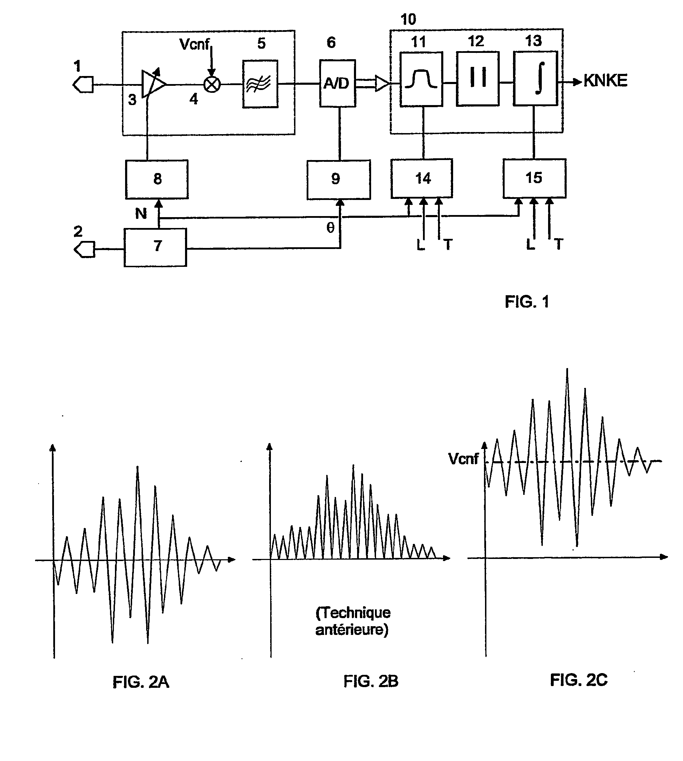

Tel qu'illustré à la figure 1, le signal analogique délivré par l'accéléromètre est amplifié dans un amplificateur 3 à gain variable G_{A}, en fonction de la vitesse de rotation du moteur. La rotation du moteur est détectée au moyen d'un capteur 2 placé sur le vilebrequin. La vitesse de rotation est déduite des informations transmises par le capteur 2 dans une unité 7 (par exemple l'unité de contrôle moteur appelée également ECU ou « Engine Control Unit »), puis transmise à une unité de calcul 8 déterminant le gain analogique G_{A} de l'amplificateur 3 en fonction de la vitesse de rotation.

Le gain G_{A} est déterminé de manière que le signal issu de l'amplificateur soit sensiblement compris entre -2,5 V et +2,5 V. Ce signal, représenté à la figure 2A, est ajouté à un signal de valeur constante Vcnf, sensiblement égale à 2,5 V, dans un sommateur 4, de sorte que le signal issu du sommateur soit positif ou nul, tel qu'illustré à la figure 2C.

Tel qu'illustré à la figure 2B, la technique antérieure consiste à redresser le signal en en rendant positive la partie négative et modifie alors les caractéristiques du signal : en particulier la fréquence harmonique principale du signal d'origine est doublée et des harmoniques supplémentaires sont créées. Ceci n'est pas acceptable car des fréquences supplémentaires totalement artificielles vont alors apparaître. Or c'est l'image spectrale du signal qui est utilisée et si cette dernière est modifiée le signal obtenu n'est plus représentatif du phénomène observé. C'est ce problème qui est surmonté avec le procédé conforme à l'invention qui consiste à ce stade par l'ajout de la valeur constante Vcnf qui ne modifie pas la nature en fréquence du spectre.

Il est ensuite transformé en signal numérique dans un convertisseur analogique numérique 6 après traitement dans un filtre anti-repliement 5 qui supprime toutes les fréquences supérieures à la moitié de la fréquence d'échantillonnage du convertisseur 6, selon le théorème de Shannon. En pratique, seule la portion du signal correspondant à la fenêtre temporelle dans laquelle l'information relative au cliquetis est la plus marquée est convertie en échantillons numérique. Cette fenêtre temporelle est déterminée dans une unité 9 en fonction d'informations relatives à la position angulaire □ du vilebrequin transmises par l'unité 7.

Par ailleurs, il sera noté que le signal entrant dans le convertisseur analogique numérique 6 est avantageusement compris entre 0 V et +5 V dans la mesure où les convertisseurs actuels du marché offrant le meilleur rapport qualité/prix acceptent cette gamme de valeurs en entrée.

Le signal entre ensuite dans une unité de traitement numérique 10 comprenant successivement un filtre passe bande 11, un redresseur 12 et un intégrateur 13.

Le filtre passe-bande 11 est un filtre à réponse impulsionnelle infinie de Butterworth dont la fonction de transfert comporte un zéro pour les fréquences nulles et implémenté par une cellule bi-quadratique. Il permet d'éliminer la composante Vcnf introduite dans le sommateur 4. Le filtre passe-bande 11 se définit par un numérateur (constitué par les zéros) et un dénominateur (constitué par les pôles) sous forme d'une équation linéaire constituée par la somme d'échantillons à chacun desquels est affecté un coefficient a₁ : a₁*échantillon_actuel + a₂*échantillon_précédent + ... + aₙ*dernier_échantillon où n est le nombre d'échantillons.

Le filtre passe-bande 11 comprend un "zéro en zéro" permettant d'éliminer la composante continue du signal échantillonné et comme il est linéaire, le zéro supplémentaire dû à la composante continue peut être regroupé avec les autres zéros naturels. Pour éliminer la composante continue Vcnf, le filtre passe-bande est implémenté dans l'ordre zéros puis pôles. Comme la structure du filtre passe-bande 11 est linéaire, il aurait toutefois pu aussi être implémenté dans l'ordre pôles puis zéros, mais l'avantage précité n'aurait pas été obtenu. Afin de diviser par 2 le nombres de registres mémoires du microprocesseur, le calcul des zéros et des pôles est réalisé successivement en utilisant les mêmes registres mémoire du microprocesseur.

De plus, les coefficients sont fournis par une unité 14 comprenant une table de valeurs fonctions de la vitesse de rotation N du moteur transmise par l'unité 7, de la charge L du moteur et de la température T du moteur transmises par des capteurs annexes. Cette liste des paramètres moteurs pris en compte n'est pas exhaustive et peut être enrichie selon le degré de finesse du traitement souhaité.

Enfin, afin que les coefficients restent dans une gamme de valeurs dans laquelle le processeur possède une précision satisfaisante, les coefficients sont divisés par un gain d'acquisition.

Ensuite, pour obtenir une représentation de l'énergie relative au cliquetis, les valeurs filtrées sont redressées dans le redresseur 12. En pratique, le bit du registre est uniformisé (éliminé dans le cas d'espèce) pour l'ensemble des valeurs.

Puis, les différentes valeurs sont additionnées dans l'intégrateur 13. Toutefois, pour éviter de déphaser le signal, l'avant dernière valeur de la sommation itérative (sur les n échantillons) est additionnée à la dernière valeur de cette sommation.

Enfin, le résultat est multiplié par le gain d'acquisition et divisé (ou multiplié par son inverse) par une constante d'intégration fournie par une unité 15 en fonction des paramètres moteurs retenus (la vitesse de rotation N du moteur, la charge L du moteur et de la température T du moteur dans le présent exemple). On obtient alors une valeur KNKE représentative de l'état de cliquetis du moteur.

## Revendications

1. Procédé de détermination de l'énergie (KNKE) du cliquetis d'un moteur à combustion interne, du type utilisant un signal analogique fourni par un capteur solidaire dudit moteur, comportant des étapes de
a) mise en forme du signal analogique,
b) conversion dudit signal analogique en séquence d'échantillons numériques,
c) filtrage numérique,
d) redressement et
e) intégration du signal,
dans lequel procédé :
i) la mise en forme du signal analogique comprend l'addition dudit signal avec une composante continue (Vcnf) adaptée à rendre ledit signal mis en forme positif ou nul,
ii) le filtrage numérique est effectué au moyen d'un filtre passe-bande à réponse impulsionnelle infinie dont la fonction de transfert comporte un zéro pour les fréquences nulles.

2. Procédé selon la revendication 1, **caractérisé en ce que** la mise en forme du signal analogique comprend également une amplification en boucle ouverte dudit signal par un gain analogique (G_{A}) déterminé en fonction du régime de rotation du moteur.

3. Procédé selon la revendication 2, **caractérisé en ce que** la mise en forme du signal analogique comprend en outre un filtre anti-repliement.

4. Procédé selon la revendication 1, **caractérisé en ce que** le filtre passe-bande est réalisé sous la forme d'une cellule bi-quadratique programmable, dont la fréquence centrale est définie en fonction des conditions de fonctionnement du moteur.

5. Procédé selon la revendication 4, **caractérisé en ce que** la mise en oeuvre numérique du filtre passe bande est effectuée par une expression récursive en deux étapes, la première étape conduisant à une variable intermédiaire représentative du calcul des zéros du filtre, la seconde s'acquittant du calcul des pôles.

6. Procédé selon la revendication 4 ou 5, **caractérisé en ce que** les coefficients du filtre passe-bande et/ou les autres paramètres de calcul sont tirés d'une table précalculée en fonction des conditions de fonctionnement du moteur.

7. Procédé selon l'une quelconque des revendications précédentes, **caractérisé en ce que** l'étape de redressement est effectuée par suppression d'un bit de signe d'un registre contenant le dernier échantillon filtré du signal.

8. Procédé selon l'une quelconque des revendications précédentes, **caractérisé en ce que** l'étape d'intégration est réalisée au moyen d'un intégrateur numérique à phase constante.

9. Procédé selon la revendication 8, **caractérisé en ce que** la mise en oeuvre de l'intégrateur est effectuée par une sommation discrète des échantillons filtrés et redressés, à laquelle on rajoute la valeur de ladite somme à l'avant-dernier échantillon.

## Claims

1. Method for determining the knock energy (KNKE) of an internal combustion engine, of the type using an analogue signal provided by a sensor incorporated in said engine, comprising the following steps
a) shaping of the analogue signal,
b) conversion of said analogue signal into a sequence of digital samples,
c) digital filtering,
d) rectification and
e) integration of the signal,
wherein
i) shaping of the analogue signal involves adding said signal to a DC component (Vcnf) designed to make said shaped signal positive or zero,
ii) digital filtering is carried out using an infinite pulse response passband filter whose transfer function contains a zero for the null frequencies.

2. Method according to claim 1, **characterized in that** the shaping of the analogue signal also involves open-loop amplification of said signal by an analogue gain (G_{A}) determined as a function of the engine speed.

3. Method according to claim 2, **characterized in that** the shaping of the analogue signal additionally involves an anti-aliasing filter.

4. Method according to claim 1, **characterized in that** the passband filter is implemented in the form of a programmable biquadratic cell whose central frequency is defined as a function of the engine operating conditions.

5. Method according to claim 4, **characterized in that** the passband filter is digitally implemented by a two-step recursive expression, the first step yielding an intermediate variable representative of the calculation of the filter zeros, the second performing the pole calculation.

6. Method according to claim 4 or 5, **characterized in that** the coefficients of the passband filter and/or the other calculation parameters are drawn from a table pre-calculated as a function of the engine operating conditions.

7. Method according to any of the preceding claims, **characterized in that** the rectification step is carried out by suppressing a sign bit of a register containing the last filtered signal sample.

8. Method according to any of the preceding claims, **characterized in that** the integration step is implemented using a constant phase digital integrator.

9. Method according to claim 8, **characterized in that** the integrator is implemented by discrete summation of the filtered and rectified samples to which the value of said sum at the penultimate sample is added.

## Patentansprüche

1. Verfahren zur Bestimmung der Energie (KNKE) des Klopfsignals einer Brennkraftmaschine, des Typs, das ein analoges Signal verwendet, das von einem Sensor bereitgestellt wird, der mit der Maschine verbunden ist, umfassend die folgenden Schritte:
a) Formen des analogen Signals,
b) Umwandeln des analogen Signals in eine Abfolge digitaler Abtastwerte,
c) digitales Filtern,
d) Gleichrichten des Signals und
e) Integrieren des Signals,
wobei in diesem Verfahren:
i) das Formen des analogen Signals das Hinzufügen des Signals zu einer kontinuierlichen Komponente (Wcnf) umfasst, die dafür angepasst ist, das geformte Signal als positiv oder null wiederzugeben,
ii) das digitale Filtern mittels eines Bandpassfilters mit unendlicher Impulsantwort erfolgt, dessen Übertragungsfunktion eine Nullstelle für die Nullfrequenzen aufweist.

2. Verfahren nach Anspruch 1, **dadurch gekennzeichnet, dass** das Formen des analogen Signals auch eine Verstärkung im offenen Regelkreis des Signals durch eine analoge Verstärkung (V_{A}) umfasst, die in Abhängigkeit von der Drehzahl der Maschine bestimmt wird.

3. Verfahren nach Anspruch 2, **dadurch gekennzeichnet, dass** das Formen des analogen Signals außerdem ein Anti-Aliasing-Filter umfasst.

4. Verfahren nach Anspruch 1, **dadurch gekennzeichnet, dass** das Bandpassfilter in Form einer programmierbaren biquadratischen Zelle ausgeführt ist, deren Mittelfrequenz in Abhängigkeit von den Betriebsbedingungen der Maschine bestimmt ist.

5. Verfahren nach Anspruch 4, **dadurch gekennzeichnet, dass** die digitale Anwendung des Bandpassfilters durch einen rekursiven Ausdruck in zwei Schritten erfolgt, wobei der erste Schritt zu einer Zwischenvariablen führt, die die Berechnung der Nullstellen des Filters darstellt, wobei der zweite zur Berechnung der Pole dient.

6. Verfahren nach Anspruch 4 oder 5, **dadurch gekennzeichnet, dass** die Koeffizienten des Bandpassfilters und/oder die anderen Berechnungsparameter einer zuvor berechneten Tabelle entnommen werden, in Abhängigkeit von den Betriebsbedingungen der Maschine.

7. Verfahren nach einem der vorhergehenden Ansprüche, **dadurch gekennzeichnet, dass** der Schritt des Gleichrichtens durch Beseitigung eines Vorzeichenbits eines Registers erfolgt, das den letzten filtrierten Abtastwert des Signals enthält.

8. Verfahren nach einem der vorhergehenden Ansprüche, **dadurch gekennzeichnet, dass** der Schritt des Integrierens mittels einer digitalen Integrierschaltung mit konstanter Phase erfolgt.

9. Verfahren nach Anspruch 8, **dadurch gekennzeichnet, dass** die Anwendung der Integrierschaltung durch eine diskrete Summation der gefilterten und gleichgerichteten Abtastwerte erfolgt, der beim vorletzten Abtastwert der Wert dieser Summe wieder hinzugefügt wird.
